# EUROPEAN PATENT APPLICATION

(11) **EP 4 336 523 A1**
(43) Date of publication of application: **13.03.2024**
(21) Application number: 23190851.8
(22) Date of filing: 10.08.2023
(51) Int. Cl.: H01F 7/08, H01F 7/16

(54) **ELECTROMAGNETIC ACTUATOR AND METHOD FOR MANUFACTURING AN ELECTROMAGNETIC ACTUATOR**

(30) Priority: 06.09.2022 IT 202200018162
(71) Applicant: Tecfluid S.r.l., 42124 Reggio Nell'Emilia (RE) (IT)
(72) Inventor: ZANICHELLI, Gabriele, 42123 Reggio nell'Emilia (IT); SACCANI, Davide, 42123 Reggio nell'Emilia (IT)
(74) Representative: Conti, Marco

(57) **Abstract**

An electromagnetic actuator (1) comprises: a pole tube (10), extending along a longitudinal axis (X) so as to define an internal volume and having an external surface (10A), the pole tube (10) being made of a ferromagnetic material and including a magnetic separation region (14) positioned at the external surface (10A), along a circumference surrounding the longitudinal axis (X), the magnetic separation region (14) defining a magnetic decoupling; an electromagnetic coil, surrounding the external surface (10A) of the pole tube (10); a stationary core (11), connected to the pole tube (10); a movable core (12), positioned in the internal volume and movable along the longitudinal axis (X), the electromagnetic actuator (1) being characterized in that the magnetic separation region (14) includes a plurality of recesses (140), angularly spaced to one another along the circumference, around the longitudinal axis (X).

## Description

The present invention relates to an electromagnetic actuator and a method for manufacturing an electromagnetic actuator.

The technical field of the present invention relates to an electromagnetic actuator, wherein a coil generates an electromagnetic field for moving a movable core positioned inside a pole tube, also called a "tube". Such actuators can be used to control valves.

Generally, the pole tube comprises a magnetic separation region, i.e., a non-magnetic zone thanks to which it is possible to direct the magnetic field lines as a function of the position of the movable core inside the tube.

It is thereby possible to intensify the magnetic force along the direction of displacement of the movable core. In this field, moreover, there is a need for the pole tube to be sufficiently resistant to external impacts and, if the pole tube contains pressurised fluid, it is also essential that it is capable of withstanding high internal pressures.

Traditionally, the magnetic separation region is made in several modes. According to a first mode, for example described by US9941042, the magnetic separation region is obtained by means of non-magnetic welding between two tubes of ferromagnetic material, along a circumference, so as to obtain the pole tube; this mode allows to obtain a rather intense magnetic field and a good mechanical resistance to external impacts and pressure thanks to the welding, however it can be complex and expensive to make, as the welding must be carried out with great precision to avoid blowholes or holes.

In a second mode, for example described in US2020/0118724, the pole tube is thinned along a circumference by means of turning; such a mode is simpler and less expensive with respect to the first one; however, the magnetic field is less intense and the pole tube can break as a result of impacts and pressures.

According to a third mode, a hybrid solution between the first and the second mode, the tube is thinned along a circumference and subsequently reinforced in the thinned zone by means of a non-magnetic weld. Thanks to the reinforcement, the thickness of the thinned area achievable by means of turning is less with respect to the thickness obtainable in the second mode, allowing to obtain a more intense magnetic field. The third mode also allows to obtain a device which is resistant to both impacts and pressures. However, this mode is also complex, since it requires welding and/or reworking after the turning, making the device relatively more expensive with respect to the second manufacturing mode.

WO2021/099007A1 shows an example of an electromagnetic actuator comprising a magnetic separation zone; however, not even this document is capable of satisfying the needs of the market.

It is an object of the present invention to provide an electromagnetic actuator and a method for manufacturing an electromagnetic actuator which overcome the aforementioned drawbacks of the prior art.

In particular, it is an object of the present invention to provide an electromagnetic actuator and a method for manufacturing an electromagnetic actuator, capable of obtaining a strong magnetic field at the magnetic interruption region.

It is a further object of the present invention to provide an electromagnetic actuator and a method for manufacturing an electromagnetic actuator, wherein the electromagnetic actuator is economical and simple to manufacture.

It is a further object of the present invention to provide an electromagnetic actuator and a method for manufacturing a resistant electromagnetic actuator, capable of resisting external impacts and high internal pressures.

Said object is fully achieved by the apparatus and by the method which are the object of the present invention, which is characterized by what is contained in the claims below.

In particular, the electromagnetic actuator comprises a pole tube, extending along a longitudinal axis so as to define an internal volume.

That is, the pole tube has a cylindrical shape extending along the longitudinal axis. The pole tube has an external surface. The pole tube is made of a ferromagnetic material, i.e., the pole tube comprises at least one portion of ferromagnetic material (e.g., ferromagnetic steel).

The electromagnetic actuator comprises an electromagnetic coil (i.e., a solenoid) for example made of copper, surrounding an external surface of the pole tube. The electromagnetic coil is configured to generate an electromagnetic field, preferably in the pole tube.

The electromagnetic actuator comprises a movable core (or movable magnetic core), located in the internal volume of the pole tube. The movable core is movable along the longitudinal axis. The movable core can be made of a magnetic or ferromagnetic material.

The actuator is configured to transfer, starting from the electromagnetic force generated by the coil, a mechanical thrust or traction force in an environment outside the electromagnetic actuator. In particular, the movable core can be configured to transfer, directly or indirectly, starting from the electromagnetic force, a mechanical thrust or traction force in an environment outside the electromagnetic actuator.

In an embodiment, the movable core has a cylindrical shape extending along the longitudinal axis to define a seat, wherein the seat is configured to house a rod. Thereby, the rod is configured to generate, starting from the electromagnetic force, a mechanical thrust or traction force in an environment outside the electromagnetic actuator.

In another example, the electromagnetic actuator comprises a sleeve, for example connected to the pole tube; the electromagnetic actuator can comprise a rod slidably inserted inside the seat of the sleeve. The movable core can be configured to move the rod and thus generate a thrust or traction force in an environment outside the electromagnetic actuator.

It should be noted that the electromagnetic actuator can be part of a valve (i.e., a solenoid valve); in this case, the movable core (i.e., the rod of the electromagnetic actuator) can be configured to open and/or close an outlet of the valve with respect to an environment outside the valve. To this end, the movable core, or more preferably the rod, can constitute a shutter for the valve, or the core (or the rod) can be configured to move the shutter of the valve to open and/or close an outlet of the valve.

The electromagnetic actuator can be an on-off actuator or a proportional actuator.

Preferably, the electromagnetic actuator comprises a stationary core (or stationary magnetic core). The stationary core is preferably made of magnetic or ferromagnetic material. The stationary core can be connected to the pole tube (i.e., the stationary core and the pole tube are distinct elements), or the stationary core can be integrated with the pole tube.

Under the action of the magnetic field generated by the coil, the movable core moves towards or away from the stationary core. The electromagnetic actuator can include a return element (e.g., a spring), configured to constrain the movable core to the pole tube or, when present, to the stationary core. The return element can be configured to work in compression or in extension.

In an example, the stationary core has a cylindrical shape extending along the longitudinal axis to define a seat, configured to slidably house a rod; thereby, the movable core can be configured to move the rod which is configured to generate a mechanical thrust or traction force in an environment outside the electromagnetic actuator, starting from the electromagnetic force generated by the coil (or, the rod can in turn be configured to move a valve shutter, slidably inserted inside the valve, for example a sleeve of the valve). Or, the rod itself can be slidably positioned inside the seat of the stationary core (or a sleeve) and can constitute a shutter for a valve.

In a preferred embodiment, the pole tube includes a magnetic separation region. The magnetic separation region defines a magnetic decoupling. In this case, the stationary core (or the movable core) is connected to the pole tube. The magnetic separation region can be positioned at the external surface of the pole tube, for example along a circumference surrounding the longitudinal axis. In addition or alternatively, the magnetic separation region can be positioned at an internal surface of the pole tube, wherein the internal surface surrounds the longitudinal axis and is opposite the internal surface, for example along an inner circumference surrounding the longitudinal axis.

It should be noted that the magnetic separation region divides the pole tube into a first portion and a second portion, aligned along the longitudinal axis. Preferably, the stationary core is located in the first portion and the movable core is located in the second portion, wherein the stationary core and the movable core are mutually movable between an approached position and a distanced position. When they are mutually approached, the stationary core and the movable core are magnetically coupled; when they are mutually distanced, the stationary core and the movable core are decoupled from (i.e., through) the magnetic decoupling defined by the magnetic separation region of the pole tube. That is, the region generates the magnetic decoupling when the movable core is distanced with respect to the fixed core.

Preferably, the magnetic separation region includes a plurality of recesses. That is, the magnetic separation region defines a notched figure comprising a plurality of recesses, i.e., a plurality of hollows, and a plurality of bridges, i.e., a plurality of zones having a thickness (i.e., width) equal to the width of the pole tube.

Preferably, the recesses are angularly distanced (i.e., spaced) from each other along the circumference, around the longitudinal axis. Preferably, the recesses are distanced at a uniform distance from each other. In an example, the recesses are angularly distanced from each other along a single circumference around the longitudinal axis. For example, the recesses of the magnetic separation region can be located at a same height (or elevation) along the longitudinal direction.

It should be noted that the sentence "the recesses are angularly distanced from each other" means that the recesses do not completely overlap when projected along a plane surrounding the longitudinal axis (that is, they do not completely overlap when projected on a flat extension of the external surface of the pole tube). In fact, a bridge is located between two contiguous recesses.

Therefore, the plurality of recesses defines the magnetic interruption region. The fact that the interruption region consists of a plurality of distanced recesses (i.e., interspersed by a corresponding plurality of bridges), and not of a continuous recess along the circumference, makes the pole tube resistant to external impacts and, if the pole tube houses pressurised liquid in the internal volume, also resistant to pressures.

The plurality of recesses also has the advantage of being able to be made by removing material from the pole tube.

In an embodiment, each recess has a depth in the radial direction (wherein the radial direction is defined perpendicularly to the longitudinal direction).

Preferably, the depth of each recess is less than a width (or thickness) of the pole tube (wherein the width of the pole tube is defined as the distance, in the radial direction, between the external surface and the internal surface of the pole tube). Thereby, each recess constitutes a blind hole. The fact that the recesses are blind holes has the advantage that they can be obtained by means of removal (e.g., grinding) without requiring welding or reworking following the removal of material (or grinding) with non-magnetic material.

Therefore, in an embodiment wherein each recess constitutes a blind hole, the recesses are configured to prevent a passage of a liquid from one part of the recess to the other. Therefore, the blind recesses (mainly) function to define the magnetic separation (interruption) zone.

In an example, the plurality of recesses is uniformly distributed along the circumference. This ensures that the magnetic field passing at the circumference (i.e., at the magnetic separation region) is as uniform as possible. That is, the recesses of the plurality of recesses are located at a same distance with respect to each other.

Preferably, the recesses of the plurality of recesses all have the same shape. Preferably, each recess has an elongated shape mainly along the longitudinal direction (parallel to the longitudinal axis). That is, each recess has a dimension along the longitudinal direction which is greater with respect to a dimension perpendicular to the longitudinal direction (i.e., in the transverse direction).

Thus, the recesses mainly extending along the longitudinal direction are made by removal (e.g., grinding) of the pole tube.

Preferably, the pole tube is made in a single piece. Therefore, the magnetic separation (interruption) region is obtained starting from the pole tube. In particular, the recesses are obtained starting from the pole tube.

The magnetic separation region (i.e., the recesses) can be made in a single piece starting from the pole tube. That is, the magnetic separation region (i.e., the recesses) is obtained (directly) starting from the pole tube.

In an example, the pole tube has no (continuous) interruptions along a circumference (i.e., interruptions around the longitudinal axis). That is, the recesses can constitute the only (discontinuous) interruption of the pole tube.

It should be noted that the recesses can constitute interruptions (i.e., the only interruptions) of the pole tube along the longitudinal direction, in particular if the recesses constitute through holes. Otherwise, the pole tube is not interrupted along the longitudinal direction, in particular if the recesses constitute blind holes.

In an embodiment, each recess comprises a first distal edge and a second distal edge, the first and the second distal edge being distal (i.e., relatively far) from the longitudinal axis. That is, the first and the second distal edge lie on the external surface of the pole tube, i.e., lie on an outer circumference of the external surface of the pole tube. The first and the second distal edge can extend along respective directions which are substantially parallel to the longitudinal axis.

Preferably, each recess comprises a first proximal edge and a second proximal edge, the first and the second proximal edge being proximal (i.e., relatively close) to the longitudinal axis (e.g., with respect to the first and the second distal edge). The first and the second proximal edge can extend along respective directions which are substantially parallel to the longitudinal axis. In an example, the first and the second proximal edge lie between the external surface and the internal surface of the pole tube, i.e., lie on an intermediate circumference of the pole tube. The intermediate circumference is comprised between the outer circumference and an inner circumference of the internal surface of the pole tube.

In an embodiment, a distance between the first proximal edge of a first recess of the plurality and a second proximal edge of a second recess of the plurality consecutive to the first recess constitutes a first parameter D1, which defines a distance between two consecutive recesses, evaluated along the intermediate circumference. Preferably, D1 is comprised between 0 mm and 0.5 mm. More preferably, D1 is greater than 0. For example, D1 is comprised between 0.1 mm and 0.3 mm, for example it is 0.15 mm.

The intermediate circumference is positioned between an outer circumference and an inner circumference, respectively lying on the external surface and on an internal surface of the pole tube. It should be noted that, if D1 is equal to 0 mm, the first proximal edge of the first recess and the second proximal edge of the second recess coincide; in this case, the magnetic separation region can define a continuous recess, i.e., an empty space (i.e., air) which runs along the circumference. In particular, the continuous recess is located between the internal surface of the hollow cylinder and the plurality of recesses. The continuous recess is preferably in communication with the plurality of recesses. When D1 is equal to 0 mm (i.e., when the magnetic separation region comprises the continuous recess), there is the advantage that the magnetic field is more intense, while the zones of the pole tube between one recess and the other ensure that the actuator is mechanically resistant. When D1 is greater than 0 mm, the distance (hereinafter indicated with D2) between the inner circumference and the intermediate circumference can be thinned to obtain a more intense magnetic field while ensuring an adequate mechanical resistance. When D1 is greater than 0 mm, said distance ensures that the actuator resists high pressures exerted outwards.

A distance between the inner circumference and the intermediate circumference of the pole tube defines a second parameter D2, which constitutes the thickness of the tube portion not affected by the recesses (and consequently also defines a depth of the recesses). D2 is preferably less than 1 mm. For example, D2 can be less than 0.7 mm. For example, D2 can be between 0.2 mm and 0.6 mm; when D2 is close to 0.7 mm or 0.6 mm a good mechanical resistance is ensured, for example at particularly high pressures (for example 350 Bar) in particular when the actuator is included in a valve or solenoid valve. However, it is observed that D2 can be less than 0.7 mm, for example 0.4 mm, in the case of a valve intended to withstand lower pressures (for example in the case of a valve which always works in discharge).

Each bridge of the plurality of bridges can have a rectangular, or trapezoidal or conical section (i.e., the section narrows towards the longitudinal axis), or even triangular, along a plane perpendicular to the longitudinal axis.

In an embodiment, a distance between the first distal edge and the second distal edge of a same recess defines a third parameter D3, which constitutes the width of a recess evaluated along the outer circumference.

In an embodiment, D3 is preferably comprised between 1.3 mm and 2.8 mm, more preferably it is comprised between 1.5 mm and 2.3 mm.

In an example, a distance between a first distal edge of a first recess and the second distal edge of a second recess, consecutive to the first recess, constitutes a fourth parameter D4 which defines a distance between the recesses evaluated along the outer circumference. D4 is preferably comprised between 0.3 mm and 0.8 mm, for example between 0.35 mm and 0.6 mm.

In an embodiment, a distance D3 between the first and the second distal edge is equal to a distance between the first and the second proximal edge of the same recess. In such a case, the recess comprises a pair of side walls extending in a radial direction in a parallel manner.

According to an example embodiment, each recess extends along a longitudinal direction parallel to the longitudinal axis. For example, each recess can have a semi-circular shape along a section of a radial plane including the longitudinal axis. In this case, the recess can be made by means of a disk grinding machine or gear cutter or hob for toothed wheels.

In another example, each recess can be trapezoidal or rectangular in shape along a section of a plane including the longitudinal axis. In this other case, the recess can be made by means of a plunge grinding machine.

In an embodiment, the number of recesses is an even number. This has the advantage of being able to make a first and a second recess at the same time, by means of a corresponding pair of grinding machines, located opposite each other, speeding up the formation of the recesses.

Preferably, when the number of recesses is an even number, the recess is made by means of a plunge grinding machine.

In an embodiment, each recess extends (i.e., is oriented) along a plane which does not pass from the longitudinal axis, i.e., is inclined with respect to the longitudinal axis.

According to an embodiment, the electromagnetic actuator is a double-acting actuator. The pole tube can include an additional magnetic separation region. It should be noted that the additional magnetic separation region can be made according to one or more aspects of the present description. Preferably, the additional magnetic separation region is positioned at the external surface along an additional circumference surrounding the longitudinal axis. Preferably the additional magnetic separation region defines a further magnetic decoupling. The electromagnetic actuator can comprise an additional electromagnetic coil, surrounding the external surface of the pole tube. The additional electromagnetic coil can be made according to one or more aspects described with respect to the electromagnetic coil.

In an example, the electromagnetic actuator can comprise an additional stationary core (or an additional movable core) preferably made according to one or more aspects described herein for the stationary core (or for the movable core).

Preferably, the additional stationary core is connected to the pole tube, so that the movable core is positioned between the stationary core and the additional stationary core. Alternatively, the electromagnetic actuator can comprise an additional movable core, positioned in the internal volume of the pole tube so that the stationary core is located between the movable core and the additional movable core. The additional magnetic separation region includes a plurality of additional recesses, angularly spaced apart to each other along the additional circumference around the axis. Each recess of the plurality of additional recesses can be made according to one or more aspects of the present invention. Therefore, the electromagnetic actuator can define a double-acting actuator.

The present description also provides a valve, comprising an electromagnetic actuator according to one or more aspects of the present description. The valve comprises a shutter and/or a rod. Preferably, the shutter (or rod) is coupled to the movable core of the electromagnetic actuator. The valve comprises an outlet, connected to the internal volume of the pole tube of the electromagnetic actuator, through the shutter. In particular, the shutter is configured to open or close the outlet under the action of an electromagnetic force generated by the electromagnetic coil.

In an example, the valve is a hydraulic valve. In particular, the shutter can be configured to receive a thrust or traction force from the movable core (or from a rod, pushed or pulled by the movable core). Therefore, the movable core can be rested at an end of the shutter or at an end of the rod.

In an example, the actuator can be operated in an open configuration, in which the internal volume of the pole tube is in fluid communication with the outlet (i.e., in which the shutter opens a fluid passage through the outlet), and in a closed configuration (i.e., in which the shutter closes or occludes a fluid passage through the outlet), in which the internal volume of the pole tube is not in fluid communication with the outlet. The shutter can be configured to switch between the open configuration and the closed configuration, under the action of an electromagnetic force generated by the coil.

In an embodiment, the valve comprises a plurality of outlets and the movable core can be configured to open or close, directly or indirectly (e.g., by moving the shutter) one or more outlets of said plurality of outlets.

The shutter can be operated in an open configuration, in which it opens a fluid passage through an outlet of the plurality of outlets, and in a closed configuration, in which it closes (occludes) a fluid passage through an outlet of the plurality of outlets.

In an example, the movable core can be operated in an active configuration and in an inactive configuration, under an action of the electromagnetic field generated by the coil. The active configuration of the core can correspond to the open configuration of the shutter and the inactive configuration can correspond to the closed configuration of the shutter (in which case, the valve is normally closed), or the active configuration can correspond to the closed configuration of the shutter and the inactive configuration can correspond to the open configuration (in which case, the valve is normally open).

The present invention also provides a method for manufacturing an electromagnetic actuator.

The method comprises a step of providing a pole tube, wherein the pole tube is made according to one or more aspects of the present description.

Preferably the pole tube extends along a longitudinal axis so as to define an internal volume and has an external surface, and is made of a ferromagnetic material and includes a magnetic separation region, wherein the magnetic separation region is positioned at the external surface, along a circumference surrounding the longitudinal axis.

The method comprises a step of providing an electromagnetic coil, made according to one or more aspects of the present description. Preferably, the electromagnetic coil surrounds an external surface of the pole tube.

The magnetic separation region defines a magnetic decoupling.

The method comprises a step of placing a movable core in the internal volume of the pole tube, movable along the longitudinal axis, the movable core being made according to one or more aspects of the present description.

The method can comprise a step of connecting a stationary core to the pole tube, wherein the stationary core is made according to one or more aspects of the present description.

Preferably, the magnetic separation region includes a plurality of recesses, angularly distanced from each other, along a circumference surrounding the longitudinal axis around the longitudinal axis.

Preferably, the recesses are distanced at a uniform distance from each other. In an example, the recesses are angularly distanced from each other along a single circumference around the longitudinal axis. For example, the recesses of the magnetic separation region can be located at a same height (or elevation) along the longitudinal direction.

In an embodiment, the method provides a step of forming each recess of the plurality of recesses, preferably in a continuous cycle.

The recesses can be made so as to constitute blind holes (to prevent the passage of a liquid from one side of the recess to the other).

Preferably, the recesses are made so as to all have the same shape. In an example, each recess has an elongated shape mainly along the longitudinal direction (parallel to the longitudinal axis). That is, each recess has a dimension along the longitudinal direction which is greater with respect to a dimension perpendicular to the longitudinal direction (i.e., in the transverse direction).

The forming step can include, for each recess of the plurality of recesses, a step of reciprocal rotation, around the longitudinal axis, between a grinding machine and the pole tube. The forming step can provide a step of approaching the grinding machine to the external surface of the pole tube. The approach can occur from an inactive position, for example of non-interference with the external surface of the pole tube, to an active position, for example in which the grinding machine is in contact with the external surface of the pole tube to form a recess. The forming step can include distancing the grinding machine from the external surface of the pole tube, in the inactive position.

In an embodiment, the grinding machine is a plunge grinding machine. Preferably, each recess has a trapezoidal shape along a section of a radial plane including the longitudinal axis.

In an example, the grinding machine comprises a pair of grinding disks, positioned around the longitudinal axis and angularly spaced from each other, so as to form a corresponding pair of recesses, during the forming step of the plurality of recesses.

In another example, the method comprises a step of forming recesses by means of a hob, for example a hob for toothed wheels.

Therefore, the recesses can be made by removal of the pole tube. Therefore, the pole tube is made in a single piece. In particular, the magnetic separation region (i.e., the recesses) is obtained (directly) starting from the pole tube. Therefore, the pole tube has no (continuous) interruptions along a circumference (i.e., interruptions around the longitudinal axis). That is, the recesses can constitute the only (discontinuous) interruption of the pole tube.

It should be noted that the recesses can constitute interruptions (i.e., the only interruptions) of the pole tube along the longitudinal direction, in particular if the recesses constitute through holes. Otherwise, the pole tube is not interrupted along the longitudinal direction, in particular if the recesses constitute blind holes.

These and other features will be clearer from the following description of a preferred embodiment, illustrated purely by way of non-limiting example in the accompanying drawings, wherein:

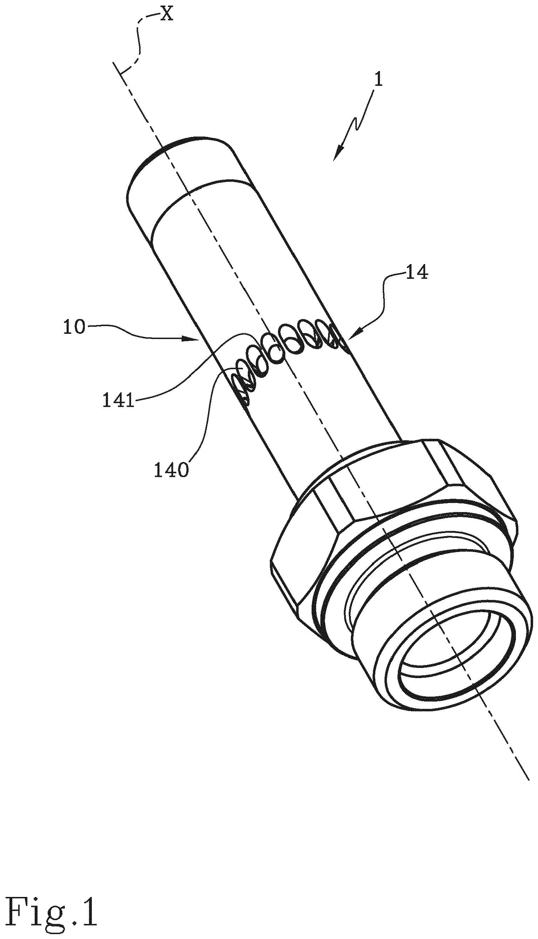

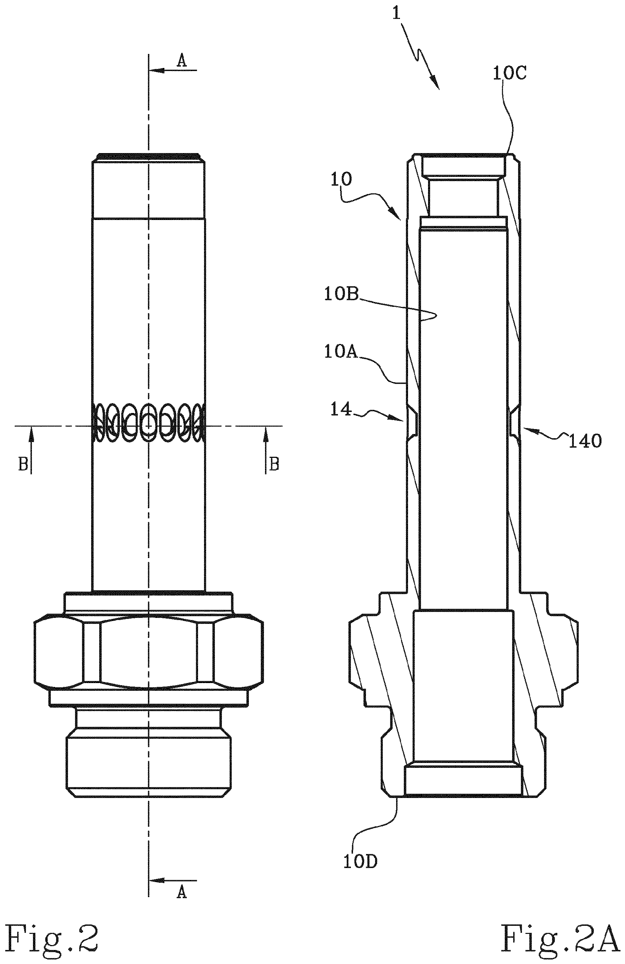

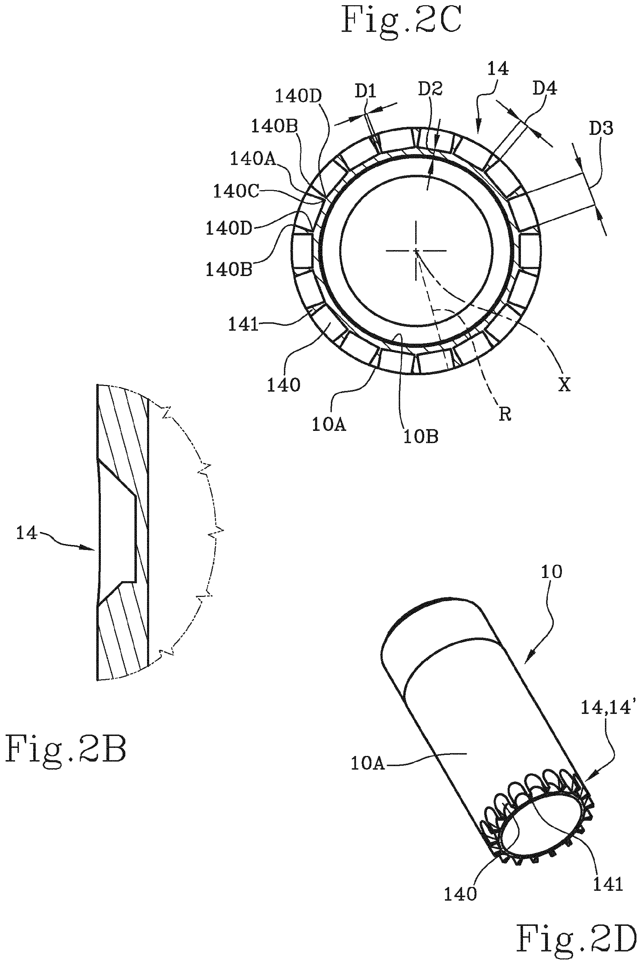

- figures 1 and 2 illustrate an electromagnetic actuator 1 according to one or more aspects of the present description;
- figure 2A illustrates a section along the direction A of figure 2 of an electromagnetic actuator 1 according to one or more aspects of the present description;
- figure 2B illustrates a recess 14 according to one or more aspects of the present description;
- figures 2C and 2D illustrate sections along direction B of figure 2 of an electromagnetic actuator 1 according to one or more aspects of the present description;

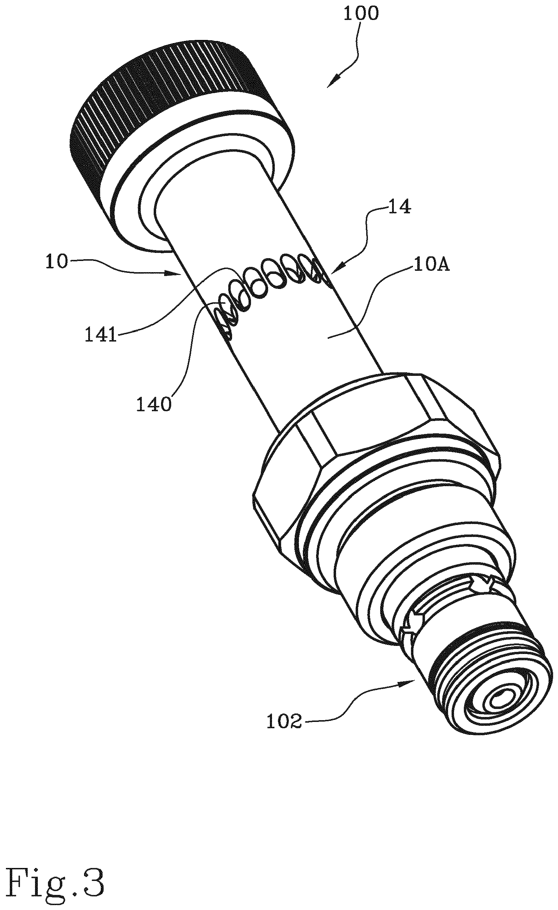

- figure 3 illustrates a valve comprising an electromagnetic actuator 1 according to one or more aspects of the present description;

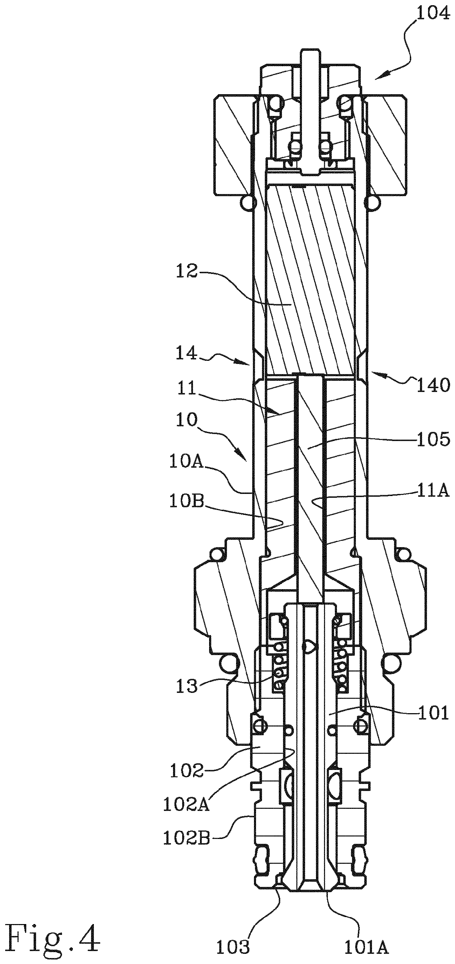

- figure 4 illustrates a section of a valve comprising an electromagnetic actuator 1 according to one or more aspects of the present description;

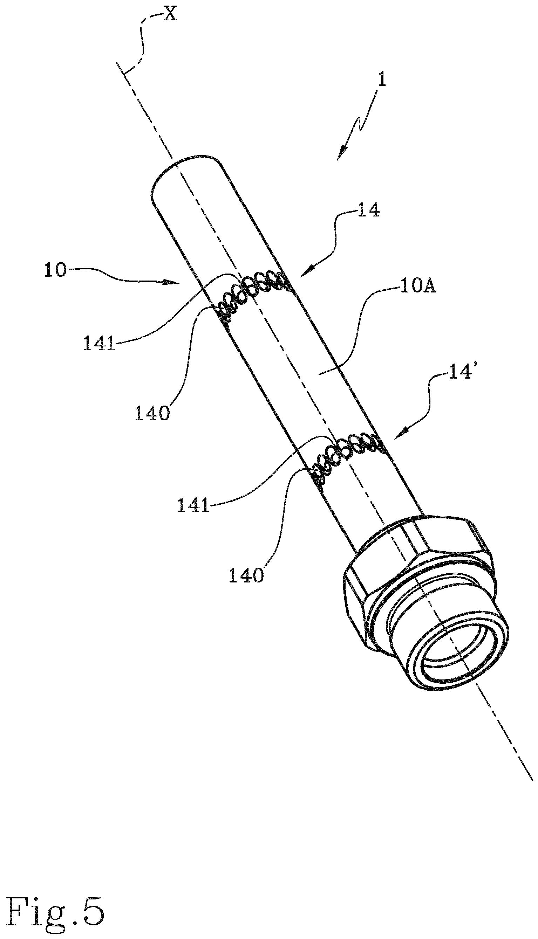

- figure 5 illustrates an electromagnetic actuator 1 wherein the actuator is a double-acting actuator, according to one or more aspects of the present description;

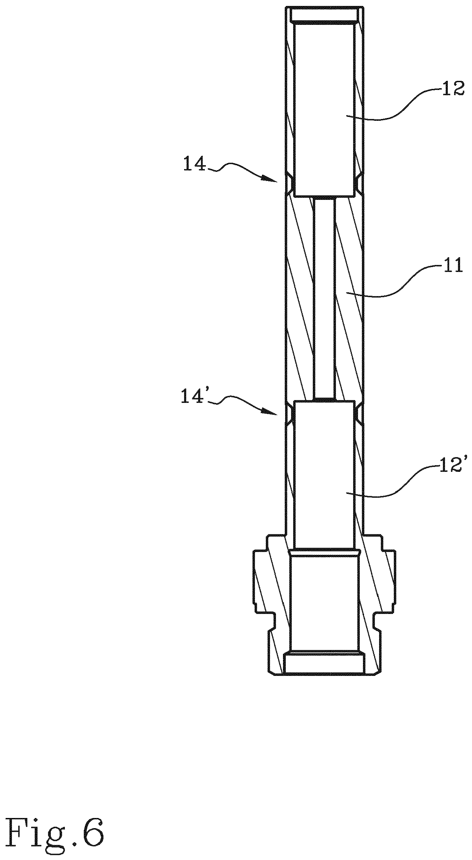

- figure 6 illustrates a section of an electromagnetic actuator 1 wherein the actuator is a double-acting actuator, according to one or more aspects of the present description;

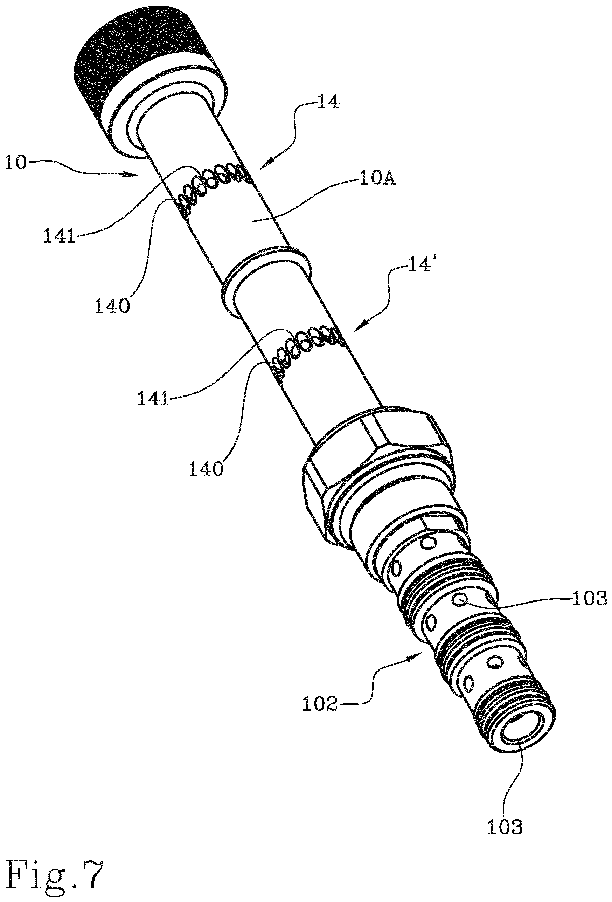

- figure 7 illustrates a valve comprising a double-acting electromagnetic actuator 1 according to one or more aspects of the present description;

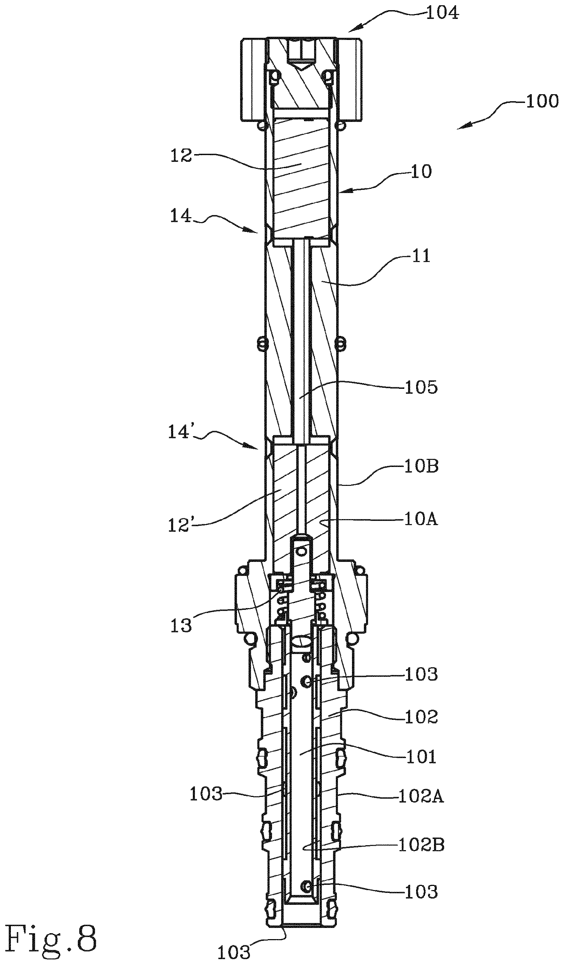

- figure 8 illustrates a section of a valve comprising a double-acting electromagnetic actuator 1 according to one or more aspects of the present description.

In the figures, an electromagnetic actuator is indicated with 1. The electromagnetic actuator 1 comprises a pole tube 10 extending along a longitudinal axis X so as to define an internal volume. The pole tube 10 is made of a ferromagnetic material. The pole tube 10 includes an external surface 10A and an internal surface 10B, opposite the external surface 10A; the external surface 10A and the internal surface 10B extend along the longitudinal axis X.

The electromagnetic actuator 10 comprises an electromagnetic coil, not shown in the figures, surrounding the external surface 10A of the pole tube 10 and configured to be crossed by a current to generate an electromagnetic field inside the pole tube 10.

The electromagnetic actuator 1 comprises a stationary core 11. According to an example not illustrated, the stationary core 11 can be connected to a first end 10C of the pole tube 10. The pole tube 10 further comprises a second end 10D.

The electromagnetic actuator 1 comprises a movable core 12, located inside the internal volume of the pole tube 10 and movable along the longitudinal axis X under the action of the magnetic field generated by the electromagnetic coil. The electromagnetic actuator 1 can comprise a return element 13. In the illustrated examples, the return element 13 is a spring.

The pole tube 10 includes a magnetic separation region 14. The magnetic separation region 14 is positioned at the external surface 10A, along a circumference surrounding the longitudinal axis X of the pole tube 10.

The magnetic separation region 14 includes a plurality of recesses 140 angularly distanced from each other along the circumference, around the longitudinal axis X. The magnetic separation region 14 includes a plurality of bridges 141, wherein each bridge 141 is interposed between a pair of recesses 140. In the illustrated examples, the plurality of recesses 140 is uniformly distributed along the circumference.

Each recess 140 has a depth in the radial direction R, wherein the radial direction R is defined perpendicularly to the longitudinal axis X. The depth in the radial direction R of the recesses 140 is less than the width of the pole tube 10, i.e., less than the distance between the external surface 10A and the internal surface 10B of the pole tube 10, said distance being evaluated in the radial direction R. Therefore, the recesses 140 constitute blind holes. It has been observed that, in the illustrated examples, the bridges 141 have a thickness in the radial direction R which is equal to the distance between the external surface 10A and the internal surface 10B of the pole tube 10.

Each recess 140 comprises a first distal edge 140A and a second distal edge 140B, wherein the first and the second distal edge 140A, 140B are distal from the longitudinal axis X, lying on the external surface 10A of the pole tube 10 and extending along respective directions substantially parallel to the longitudinal axis X.

Each recess 140 comprises a first proximal edge 140C and a second proximal edge 140D, wherein the first and the second proximal edge 140C, 140D are proximal to the longitudinal axis X, with respect to the first and the second distal edge 140A, 140B which instead are further away with respect to the longitudinal axis X. The first and the second proximal edge 140C and 140D lie on an intermediate circumference of the pole tube 10 and extend along respective directions which are substantially parallel to the longitudinal axis X. In particular, the intermediate circumference is comprised between the external surface 10A and the internal surface 10B (or between an outer circumference of the external surface 10A and an inner circumference of the internal surface 10B).

Preferably, a distance D1 between the first proximal edge 140C of a first recess 140 and the second proximal edge 140D of a second recess 140 subsequent or contiguous to the first recess 140 is comprised between 0 mm and 0.5 mm. In the illustrated example, said distance D1 is greater than 0 mm.

Preferably, a distance D4 between the first distal edge 140A of a first recess 140 and the second distal edge 140B of a second recess 140 subsequent or contiguous to the first recess 140 is comprised between 0.3 mm and 0.8 mm.

In the illustrated example, the distance D1 between the first and the second distal edge 140A, 140B is equal to the distance between the first and the second proximal edge 140C and 140D of a same recess 140, so that each recess 140 defines a pair of parallel side walls extending in the radial direction R. Therefore, in the illustrated example, each recess 140 has a substantially rectangular section along a plane perpendicular to the longitudinal axis X. Consequently, each bridge 141 has a trapezoidal or conical section along the plane perpendicular to the longitudinal axis X.

Preferably, a distance D3 between a first distal edge 140A and a second distal edge 140B of the same recess 140 is greater than a distance D4 between a first distal edge 140A of a first recess 140 and a second distal edge 140B of a second recess 140 contiguous to the first recess 140. A distance D2 between the intermediate circumference and the inner circumference is preferably equal to 0.7 mm.

Each recess 140 extends along a longitudinal direction parallel to the longitudinal axis X. In an example, each recess 140 can have a semi-circular or arch shape along a section of a radial plane including the longitudinal axis X. Preferably, each recess 140 has a trapezoidal shape along the section of the radial plane.

Preferably, the number of recesses 140 is an even number.

In an example, the electromagnetic actuator 1 is a double-acting electromagnetic actuator 1. The double-acting electromagnetic actuator 1 comprises an additional magnetic separation region 14'. The additional magnetic separation region 14' can be made according to one or more aspects described for the magnetic separation region 14. The double-acting electromagnetic actuator 1 comprises an additional electromagnetic coil, not shown, surrounding the external surface 10A of the pole tube 10.

In an example not illustrated, the double-acting actuator 1 comprises an additional stationary core and the movable core 12 is positioned between the stationary core 11 and the additional stationary core.

In another example, the double-acting actuator 1 comprises an additional movable core 12' and the stationary core 11 is integrated in the pole tube 10, interposed between the movable core 12 and the additional movable core 12'.

In an example, the electromagnetic actuator 1 is part of a valve 100, for example a hydraulic valve, wherein the electromagnetic actuator 1 can comprise one or more features of the present description.

For example, the valve 100 comprises a rod 105 slidably inserted in a seat 11A of the stationary core 11.

The movable core 12 can be operated in an active configuration, in which it is attracted towards the stationary core 11, and an inactive configuration, in which the stationary core 11 and the movable core 12 are mutually distanced. The rod 105 is configured to translate longitudinally along the longitudinal axis X, in contact with the movable core 12. For example, the rod 105 is configured to translate in the active configuration of the stationary core 11. The valve 100 comprises a shutter 101, in contact with the rod 105 and configured to translate along the longitudinal axis X, in the active configuration of the movable core 12.

The valve 100 comprises a sleeve 102, extending along the longitudinal axis X and including an external surface 102A and an internal surface 102B. A portion of the external surface 102A of the sleeve 102 is coupled to a corresponding portion of the internal surface 10B of the pole tube 10.

The internal surface 102B of the sleeve 102 defines a seat for the shutter 101, wherein the shutter 101 is configured to translate longitudinally in the seat.

The valve 100 comprises an outlet 103 for a fluid passage, connected to the internal volume of the pole tube 10 through the shutter 101. Preferably, the sleeve 102 comprises an end portion defining the outlet 103 of the valve 100. In particular, the shutter 101 is configured to close a fluid passage through the outlet 103. The shutter can include an end portion 101A configured to close the passage. In an example, the shutter 101 is tubular in shape, i.e., it comprises a passage for a fluid extended along the longitudinal axis X.

The valve 100 comprises a return element 13. The fixed core 11 and the shutter 101 can be mutually connected by means of the return element 13 (in the illustrated example, a spring). Thereby, under the action of the electromagnetic field, the movable core 12 is attracted by the fixed core 11 in the active position, while the shutter 101 switches to the open configuration to open a passage for the fluid through the outlet 103. In the open configuration, the shutter 101 is in an extracted position with respect to the sleeve 102. Once the electromagnetic field is switched off, the movable core 12 returns to the inactive position, mutually distanced from the stationary core 11, due to the effect of the return element 13; the shutter 101 passes from the open position to the closed position, in which it is in a retracted position with respect to the sleeve 102.

The valve 100 can comprise a rear fixing assembly 104 connected to an end 10C of the pole tube 10.

The valve 100 can comprise an electromagnetic actuator 1 wherein the electromagnetic actuator is double-acting. The actuator 1 can comprise an additional movable core 12'. The stationary core 11 can be connected or integrated with the pole tube 10. The valve 100 can comprise a plurality of outlets 103. One among the movable core 12 and the additional movable core 12' can be configured to indirectly or directly compress a return element 13, wherein the return element 13, for example, can be fixed to the shutter 101 and to the sleeve 102.

The electromagnetic actuator 1 is made by arranging the electromagnetic coil around the external surface 10A of the pole tube 10. The stationary core 11 is located in the internal volume of the pole tube 10 and connected to the pole tube 10. The movable core 12, which can be translated along the longitudinal axis X, is also located inside the pole tube 10.

The pole tube 10 comprises the plurality of recesses 140, which are made by grinding, preferably in a continuous cycle, with a grinding machine.

The pole tube 10 and the grinding machine rotate mutually around the longitudinal axis X, and the grinding machine radially approaches the external surface 10A of the pole tube 10 to make a recess. Thereafter, the grinding machine moves away from the external surface 10A in a radial direction. The recess 140 contiguous to the one previously made is made by mutually rotating the pole tube 10 and the grinding machine around the longitudinal axis X and approaching the grinding machine to the external surface 10A to form the subsequent recess 140. The steps of rotating, approaching, and distancing are thus repeated to form all the recesses 140 along a circumference of the pole tube 10. The procedure for forming the recesses 140 can be repeated to form a plurality of additional recesses 140 to obtain the double-acting electromagnetic actuator or the valve comprising the double-acting electromagnetic actuator.

As an alternative to the grinding machine, the recesses 140 can be made by means of a hob, for example for toothed wheels. Similarly, forming the recesses 140 involves mutually rotating the hob and the pole tube 10, approaching the hob or the pole tube 10 to form a recess 140 and distancing the hob or the pole tube 10 and then proceeding with forming a subsequent recess 140.

The grinding machine can be a disk grinding machine. In this case, the recesses 140 have a semi-circular or arch profile in the radial plane.

Alternatively, the grinding machine can be a plunge grinding machine and the recesses 140 have a rectangular or trapezoidal profile in the radial plane.

## Claims

1. An electromagnetic actuator (1), comprising:
- a pole tube (10), extending along a longitudinal axis (X) to define an internal volume and having an external surface (10A), the pole tube (10) being made of a ferromagnetic material and including a magnetic separation region (14) positioned at the external surface (10A) along a circumference surrounding the longitudinal axis (X), the magnetic separation region (14) defining a magnetic decoupling;
- an electromagnetic coil, surrounding the external surface (10A) of the pole tube (10);
- a stationary core (11), connected to the pole tube (10);
- a movable core (12), positioned in the internal volume and movable along the longitudinal axis (X),
**characterized in that** the magnetic separation region (14) includes a plurality of recesses (140) angularly spaced to one another along the circumference, around the longitudinal axis (X).

2. The electromagnetic actuator (1) according to claim 1, wherein each recess (140) has a depth in a radial direction (R), the depth being smaller than a width of the pole tube (10), so that each recess (140) constitutes a blind hole.

3. The electromagnetic actuator (1) according to claim 1 or 2, wherein the plurality of recesses (140) is uniformly distributed along the circumference.

4. The electromagnetic actuator (1) according to any one of the previous claims, wherein each recess (140) comprises:
- a first and a second distal edge (140A, 140B), distal from the longitudinal axis;
- a first and a second proximal edge (140C, 140D), proximal to the longitudinal axis (X) with respect to the first and the second distal edge (140A, 140B), wherein a distance (D1) between a first proximal edge (140C) of a first recess (140) and a second proximal edge (140D) of a second recess (140), consecutive to the first recess (140), is comprised between 0 mm and 0.3 mm said distance (D1) being evaluated along an intermediate circumference of the pole tube (10), the intermediate circumference being located between an outer circumference and an inner circumference, lying, respectively, on the external surface (10A) and on an internal surface (1 0B) of the pole tube (10).

5. The electromagnetic actuator (1) according to claim 4, wherein a first distance (D3), between a first (140A) and a second distal edge (140B) within a same recess (140) is comprised between 1.3 mm and 2.8 mm, and a second distance (D4), between a first distal edge (140A) of a first recess (140) and the second distal edge (140B) of a second recess (140), consecutive to the first recess (140), is comprised between 0.3 mm and 0.8 mm, the first (D3) and the second distance (D4) being evaluated along the outer circumference of the tube pole (10).

6. The electromagnetic actuator (1) according to any one of the previous claims, wherein each recess (140) extends in a longitudinal direction parallel to the longitudinal axis (X).

7. The electromagnetic actuator (1) according to any one of the previous claims, wherein each recess (140) has a trapezoidal shape in a cross section according to a radial plane including the longitudinal axis (X).

8. The electromagnetic actuator (1) according to any one of the previous claims, wherein the number of recesses (140) is an even number.

9. The electromagnetic actuator (1) according to any one of the previous claims, wherein the pole tube (10) includes an additional magnetic separation region (14') defining a further magnetic decoupling, positioned at the external surface (10A) along an additional circumference surrounding the longitudinal axis (X), the electromagnetic actuator (1) comprising:
- an additional electromagnetic coil, surrounding the external surface (10A) of the pole tube (10);
- an additional stationary core, connected to the pole tube (10), so that the movable core (12) is placed between the stationary core (11) and the additional stationary core,
wherein the additional magnetic separation region (14') includes a plurality of additional recesses (140) angularly spaced to one another along the additional circumference, around the longitudinal axis (X).

10. A valve (100), comprising:
- the electromagnetic actuator (1) according to any one of the previous claims;
- a shutter (101), coupled to the movable core (12) of the electromagnetic actuator (1);
- an outlet (103), connectable to the internal volume of the pole tube (10) of the electromagnetic actuator (1), through the shutter (101), so that the shutter (101) opens or closes the outlet (103) under an electromagnetic force generated by the electromagnetic coil.

11. A method for manufacturing an electromagnetic actuator (1), comprising the following steps:
- providing a pole tube (10), extending along a longitudinal axis (X) to define an internal volume and having an external surface (10A), the pole tube (10) being made of a ferromagnetic material and including a magnetic separation region (14) positioned at the external surface (10A) along a circumference surrounding the longitudinal axis (X), the magnetic separation region (14) defining a magnetic decoupling;
- providing an electromagnetic coil, surrounding the external surface (10A) of the pole tube (10);
- connecting a stationary core (11) to the pole tube (10);
- placing a movable core (12) in the internal volume of the pole tube (10), movable along the longitudinal axis (X),
**characterized in that** the magnetic separation region (14) includes a plurality of recesses (140) angularly spaced to one another along a circumference, around the longitudinal axis (X).

12. The method according to claim 11, comprising a step of forming each recess (140) of the plurality of recesses (140) in a continuous cycle, including, for each recess (140) of the plurality of recesses (140), the following steps:
- reciprocal rotation, around the longitudinal axis (X), between a grinding machine and the pole tube (10);
- approaching the grinding machine to the external surface (10A) of the pole tube (10), from an inactive position, of non-interference with the external surface (10A) of the pole tube (10), to an active position, in which the grinding machine is in contact with the external surface (10A) of the pole tube (10), so as to form a recess (140);
- distancing the grinding machine from the external surface (10A) of the pole tube (10), in the inactive position.

13. The method according to claim 12, wherein the grinding machine is a plunge grinding machine and wherein each recess (140) has a trapezoidal shape in a cross section according to a radial plane including the longitudinal axis (X).

14. The method according to claim 12, wherein the grinding machine comprises a pair of grinding disks located around the longitudinal axis (X) and angularly spaced to one another, so as to form a corresponding pair of recesses (140) during the step of forming the plurality of recesses (140).

15. The method according to any one of claims from 11 to 14, wherein each recess (140) comprises:
- a first and a second distal edge (140A, 140B), distal from the longitudinal axis (X);
- a first and a second proximal edge (140C, 140D), proximal to the longitudinal axis (X) with respect to the first and the second distal edge (140A, 140B), wherein a distance (D1) between a first proximal edge (140C) of a first recess (140) and a second proximal edge (140D) of a second recess (140), consecutive to the first recess (140), is comprised between 0 mm and 0.3 mm, said distance (D1) being evaluated along an intermediate circumference of the pole tube (10), the intermediate circumference being located between an outer circumference and an inner circumference, lying, respectively, on the external surface (10A) and on an internal surface (1 0B) of the pole tube (10).
